Europäisches Patentamt

European Patent Office

Office européen des brevets

(11) Publication number: **0 122 506**
**B1**

# EUROPEAN PATENT SPECIFICATION

(45) Date of publication of patent specification: **14.01.87**

(51) Int. Cl.⁴: **C 02 F 7/00,** C 02 F 3/20

(21) Application number: **84103165.1**

(22) Date of filing: **22.03.84**

(54) **Device for blowing a gas into a liquid.**

(30) Priority: **23.03.83 SE 8301583**

(43) Date of publication of application:
**24.10.84 Bulletin 84/43**

(45) Publication of the grant of the patent:
**14.01.87 Bulletin 87/03**

(84) Designated Contracting States:
**AT BE CH DE FR GB IT LI LU NL**

(56) References cited:
**DE-A-2 607 963**
**DE-A-3 209 283**
**FR-A-2 099 090**

(73) Proprietor: **PURAC AB**
**Box 1146**
**S-221 05 Lund (SE)**

(72) Inventor: **Gunnarsson, Rolf**
**Gillesvägen 26**
**S-241 00 Eslöv (SE)**

(74) Representative: **Müller, Hans-Jürgen, Dipl.-Ing.**
**et al**
**Müller, Schupfner & Gauger Lucile-Grahn-**
**Strasse 38 Postfach 80 13 69**
**D-8000 München 80 (DE)**

Courier Press, Leamington Spa, England.

## Description

The invention relates to a device for supplying and mixing gas to a liquid as mentioned in the opening part of claim 1. Such devices are known e.g. FR—A—2 099 090 and DE—A—2 607 963. The central tube is guided above the liquid and may be supported by a floating body fixed to the tube.

The objective of the invention is to facilitate the structure of the device in spite of economic function.

The invention is claimed in claim 1.

According to the invention the supplying and blowing in of gas can be carried out under a maximum of surface area and the level of the liquid can be permitted to fluctuate from a certain minimum depth to an optional maximum depth in the reservoir without changing the capacity of the gas supply by a siumple structure which needs no gas supply pipes above the upper level of the liquid. A plurality of distribution tubes radially projects from a central tube which is rotatable around its longitudinal axis, each of said distribution tubes being provided with a plurality of gas outlets. Said gas outlets are arranged to direct a flow of gas in the horizontal plane in such a way that they are co-operating in order to give the device a rotating movement and that the said distribution tubes and/or the central tube are connected to floating means which are arranged to define the position of the said distribution tubes in relation to the surface level of the liquid. Therefore, also driving means can be avoided above the level of liquid.

One embodiment of the invention will be described with reference to the enclosed schematic drawing in which

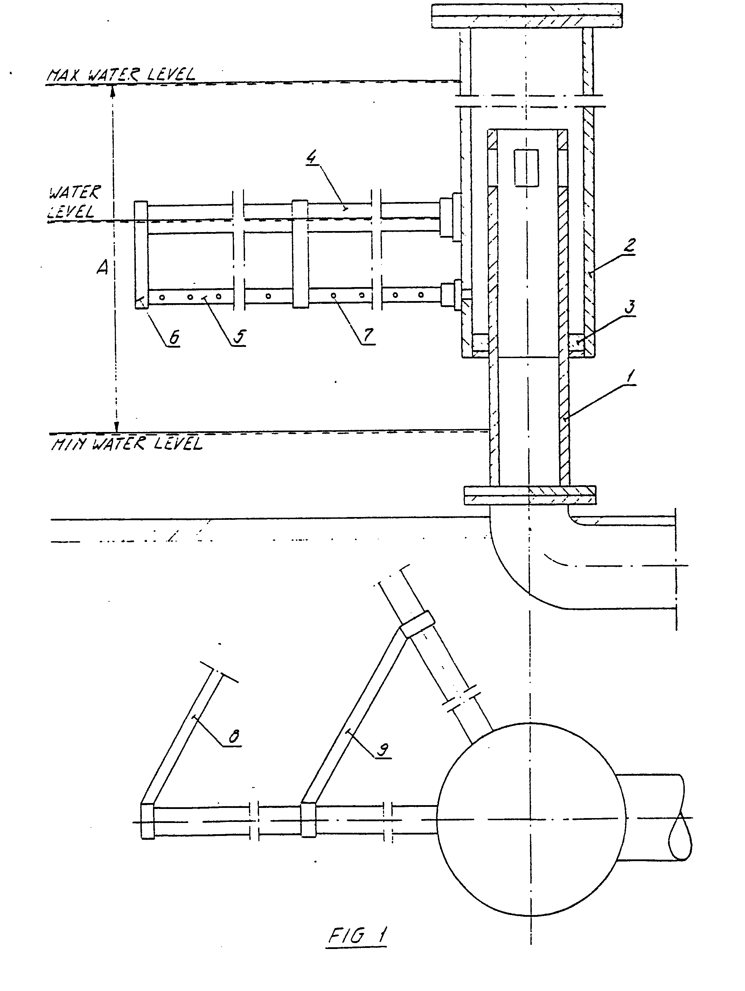

Fig. 1 is showing a part of a cross section through the device and

Fig. 2 is showing a part of a view seen from above.

Description of an embodiment of the invention:

In the drawing the inner stationary central tube is designated with 1 and the outer moveable and rotatable tube with 2. The outer tube 2 is at its lower end provided with a sealing designated by 3. The floating means which are attached to the tube 2 are designated with 4. The distribution tubes designated by 5 are by means of the fastening devices 6 attached to the floating means 4. The outlets for the gas in the distribution tubes 5 are designated by 7. Supports inbetween the floating means 4 and the distribution tubes 5 are designated by 8 and 9 respectively. Permitted fluctuation for the level of the liquid has been designated by A.

As earlier mentioned one or more of the devices in acordance with the invention are placed in a reservoir, a tank or a dam containing a liquid which is intended to be treated with gas, for instance air whereby the gas with even distribution is brought into contact with the liquid.

From a source of pressurized gas, not shown here, the gas intended for the treatment is conveyed to a stationary tube 1 extending from the bottom of the device, which tube is supporting and guiding the rotatable tube 2. The stationary central tube 1 is carrying the rotatable tube 2 which is closed at its upper end and which is telescopically arranged over the stationary central tube 1. By means of a sealed or tight slide bearing 3 the rotatable central tube 2 is journalled for rotating as well as sliding movement along the stationary tube 1. Owing to the fact that the stationary central tube 1 is at its upper end in communicating with the inside of the rotatable central tube 2 this will be filled with the said gas intended for supplying to the liquid. As the said radially arranged distribution tubes 5 are communicating with the rotatable tube 2 the gas will be introduced into the distribution tubes 5 and be pressed out through the gas outlets in the form of holes or nozzles 7 in the distribution tubes 5 which holes are directed for a gas flow mainly in the horizontal plane.

As the holes or nozzles 7 are arranged to give the jets of outflowing gas a direction which is perpendicular to the axis of the distribution tubes 5 the outflowing gas will be means of a combined action- and reaction force on the distribution tubes 5 turn the device around the central tube 1. This action on the distribution tubes will of course be amplified if all the holes or nozzles 7 in all the direction tubes 5 are arranged to cooperate.

Due to the force action on the liquid from the outflowing gas the liquid will be given a rotating movement in opposite direction compared with the movement of distribution tubes 5. This movement of the liquid will promote the admixture of gas and prolong the time during which the liquid will stay in the reservoir in the case the liquid continuously is supplied to and removed from the reservoir. In order to make it possible for the device to function when the level of the liquid in the reservoir is fluctuating and always to work against a constant counterpressure from the liquid the blowing in of the gas has to be performed at a constant depth under the level of the liquid. This is attained by the help of floating means 4 which are connected to the rotatable tube 2 and/or the distribution tubes 5. Said floating means 4 which in order to prevent unbalance ought to be evenly distributed around the rotatable central tube 2 can as shown be arranged parallel with the distribution tubes 5 i.e. radially.

The floating means 4 can however also be arranged tangentially which has the advantage that the resistance against the movement along the surface of the liquid will be decreased (especially in the case the floating means 4 are given the form of circular segments). A further advantage is that the floating means 4 or more correct parts connected to the floating means 4 can form supports 8, 9 which will mecanically stabilize the distribution tubes 5.

The maximally permitted variation of the level for the liquid surface is determined by the length of the stationary central tube 1 and the length of the rotatable tube 2. The liquid volume in the reservoir which is directly treated with gas is determined by the length of the distribution tubes 5.

It has been found that an effective gas treatment can be achieved in a cheap, simple and safe way by means of the device in accordance with the invention.

**Claims**

1. Device for supplying and mixing gas, preferably air, to a liquid, comprising a plurality of distribution tubes (5) radially projecting from a central tube (2) which is supported by a fixed guide means and which is rotatable around its longitudinal axis, each of said distribution tubes (5) being provided with a plurality of gas outlets (7) being arranged to direct a flow of gas in the horizontal plane and to give the distribution tube (5) a rotating movement, wherein the rotatable central tube (2) is connected to floating means (4) which are arranged to define the position of the said distribution tubes (5) in relation to the surface level of the liquid, characterized in that the fixed guide means is formed by a central tube (1) which extends from the bottom of the device and which is connected to a source of pressurized gas, preferably air, and that said rotatable tube (2) is telescopically arranged around and radially as well as longitudinally journalled on the fixed central tube (1) so that the central tube (1) communicates with the rotatable tube (2) and with the distribution tubes (5).

2. Device in accordance with claim 1, characterized in that the outlets (7) of the distribution tubes (5) are directed in tangential direction to said rotating movement of the distribution tubes (5).

3. Device in accordance with claim 1 or 2, characterized in that the distribution tubes (5) as well as the floating means (4) are evenly distributed around the rotatable central tube (2).

**Patentansprüche**

1. Vorrichtung zur Zuführung und zum Mischen von Gas, vorzugsweise Luft, mit einer Flüssigkeit, bei der eine Anzahl von Verteilungsrohren (5) radial von einem Zentralrohr (2) absteht, das durch ortsfeste Führungsorgane abgestützt und um seine Längsachse drehbar ist, und bei der jedes Verteilungsrohr (5) mit einer Mehrzahl von Gasaustrittsöffnungen (7) versehen ist, welche derart angeordnet sind, daß ein Gasstrom in horizontaler Ebene gerichtet ist und den Verteilungsrohren (5) eine Rotationsbewegung verleiht, und bei der das drehbare Zentralrohr (2) mit Schwimmkörpern (4) verbunden ist, die derart angeordnet sind, daß sie die Lage der Verteilungsrohre (5) in Bezug zur Flüssigkeitsoberfläche definieren, dadurch gekennzeichnet, daß die ortsfesten Führungsorgane durch ein mittiges Rohr (1), das sich vom Boden der Vorrichtung ausgehend erstreckt und mit einer Quelle für unter Druck stehendem Gas, vorzugsweise Luft, verbunden ist, gebildet sind, und daß das drehbare Rohr (2) teleskopartig rings um das ortsfeste mittige Rohr (1) angeordnet und sowohl radial als auch in Längsrichtung an diesem gelagert ist, so daß das mittige Rohr (1) mit dem drehbaren Rohr (2) und mit den Verteilungsrohren (5) kommuniziert.

2. Vorrichtung nach Anspruch 1, dadurch gekennzeichnet, daß die Austrittsöffnungen (7) der Verteilungsrohre (5) in Tangentialrichtung zu der Rotationsbewegung der Verteilungsrohre (5) gerichtet sind.

3. Vorrichtung nach Anspruch 1 oder 2, dadurch gekennzeichnet, daß die Verteilungsrohre (5) und auch die Schwimmkörper (4) gleichmäßig rings um das drehbare Zentralrohr (2) angeordnet sind.

**Revendications**

1. Dispositif pour amener et mélanger un gaz, de préférence de l'air, à un liquide, comprenant une pluralité de tubes de distribution (5) s'étendant radialement à partir d'un tube central (2) qui est supporté par un moyen de guidage fixé et qui peut tourner autour de son axe longitudinal, chacun desdits tubes de distribution (5) présentant une pluralité d'orifices de sortie de gaz (7) disposés pour diriger un écoulement de gaz dans le plan horizontal et pour communiquer aux tubes de distribution (5) un mouvement de rotation tandis que le tube central tournant (2) est raccordé à des moyens flotteurs (4) qui sont disposés pour établir la position desdits tubes de distribution (5) par rapport au niveau de la surface du liquide, caractérisé en ce que le moyen de guidage fixe est formé par un tube central (1) qui s'étend à partir du fond du dispositif et qui est raccordé à une source de gaz sous pression, de préférence de l'air, et que ledit tube tournant (2) est disposé télescopiquement sur son pourtour et radialement ainsi que longitudinalement pour pivoter sur le tube central fixe (1) de façon que le tube central (1) communique avec le tube tournant (2) et avec les tubes de distribution (5).

2. Dispositif selon la revendication 1, caractérisé en ce que les sorties (7) des tubes de distribution (5) sont dirigées en direction tangentielle du mouvement de rotation des tubes de distribution (5).

3. Dispositif selon la revendication 1 ou la revendication 2, caractérisé en ce que les tubes de distribution (5) ainsi que les moyens flotteurs (4) sont répartis uniformément autour du tube central tournant (2).

FIG 1